(19) Europäisches Patentamt / European Patent Office / Office européen des brevets

(11) **EP 1 459 024 B1**

(12) **FASCICULE DE BREVET EUROPEEN**

(45) Date de publication et mention
de la délivrance du brevet:
**04.04.2007 Bulletin 2007/14**

(21) Numéro de dépôt: **02799824.4**

(22) Date de dépôt: **18.12.2002**

(51) Int Cl.:
***F26B 23/00*** *(2006.01)*

(86) Numéro de dépôt international:
**PCT/FR2002/004434**

(87) Numéro de publication internationale:
**WO 2003/054463 (03.07.2003 Gazette 2003/27)**

(54) **PROCEDE ET INSTALLATION DE SECHAGE D'UNE MASSE DE LINGE PAR COMPRESSION MECANIQUE D'AIR TRES HUMIDE**

VERFAHREN UND VORRICHTUNG ZUM TROCKNEN EINER MENGE WÄSCHE DURCH MECHANISCHE VERDICHTUNG VON LUFT MIT HOHEM FEUCHTIGKEITSGEHALT

METHOD AND INSTALLATION FOR DRYING A MASS OF LAUNDRY BY MECHANICAL COMPRESSION OF VERY MOIST AIR

(84) Etats contractants désignés:
**AT BE BG CH CY CZ DE DK EE ES FI FR GB GR IE IT LI LU MC NL PT SE SI SK TR**

(30) Priorité: **21.12.2001 FR 0116767**

(43) Date de publication de la demande:
**22.09.2004 Bulletin 2004/39**

(73) Titulaire: **ARMINES**
**75272 Paris Cedex 06 (FR)**

(72) Inventeurs:
• **CLODIC, Denis**
**F-75006 Paris (FR)**
• **PALANDRE, Lionel**
**F-94210 La Varenne Saint Hilaire (FR)**

(74) Mandataire: **Grynwald, Albert et al**
**SCHMIT - CHRETIEN - SCHIHIN SNC - CABINET GRYNWALD**
**16 Rue de la Paix**
**75002 Paris (FR)**

(56) Documents cités:
**EP-A- 0 273 406**      **FR-A- 2 745 896**
**FR-A- 2 785 372**      **GB-A- 2 135 034**

**Description**

*Domaine concerné*

La présente invention concerne un procédé et une installation de séchage d'une masse de matière fibreuse, notamment du linge humide après lavage.

***Exposé du problème posé et art antérieur***

La demande de brevet Denis CLODIC déposée au nom de ARMINES, le 2 novembre 1998, sous le numéro 98 13902 et publiée sous le numéro FR 2 785 372, décrit un procédé de séchage par vapeur d'eau surchauffée (VES). La vapeur d'eau surchauffée échange sa chaleur avec du linge dont l'eau s'évapore à 100 °C puis cette eau est condensée sur un condenseur pour maintenir la pression constante dans le circuit et en même temps permettre une nouvelle surchauffe de la vapeur. Cette vapeur est mise en mouvement par un ventilateur. Dans le procédé selon l'art antérieur, une fraction de la vapeur d'eau surchauffée (VES) fait l'objet d'un processus de compression afin de récupérer la chaleur de condensation pour surchauffer la vapeur d'eau à l'entrée de la zone de séchage. Ce procédé de séchage par VES permet d'améliorer l'efficacité énergétique globale d'environ 60 % (passage d'une consommation de 700 Wh/kg de coton sec, consommation typique des meilleurs sèche-linges actuels, à moins de 330 Wh/kg de coton sec). Toutefois la réalisation d'un circuit de vapeur d'eau à la pression atmosphérique et à une température supérieure à 100°C peut poser des problèmes d'étanchéité, notamment au passage des joints tournants.

Le préambule des revendications 1 et 4 est représenté par ce document.

La présente invention a pour objet de faciliter la réalisation technique de l'équipement de séchage du linge tout en maintenant les performances énergétiques de ce procédé à un niveau comparable au procédé selon l'art antérieur.

Ce but est réalisé par les caractéristiques de la partie caractérisante des revendications 1 et 4.

La condensation dans le condenseur de la fraction d'air humide dérivée fournit l'énergie calorifique nécessaire pour chauffer l'air humide avant l'entrée de la zone de séchage.

De préférence, selon l'invention, l'installation est telle que le compresseur comprime la fraction dérivée de l'air humide à une pression telle que la température de condensation dans le condenseur soit comprise entre 95°C et 135°C. Il en résulte que l'air humide à l'entrée de la zone de séchage est chauffé dans une gamme de température comprise entre 95°C et 135°C.

De préférence, selon l'invention l'installation est telle que le circuit de refroidissement du condenseur est préférentiellement à courant croisé à tendance contre-courant.

De préférence, selon l'invention l'installation est telle qu'elle comprend une vanne à cinq voies comportant une voie de mise à l'air.

Le procédé de séchage selon l'invention, par compression mécanique d'air très humide, permet de réduire la consommation d'énergie électrique des sèches domestiques. Leur consommation est de l'ordre de 700 Wh / kg de linge, le procédé selon l'invention permet de réduite celle-ci à environ 350 Wh / kg de linge sec.

La mise en oeuvre du procédé est simple, on en comprendra ci-après les raisons. Le procédé permet d'utiliser des technologies disponibles pour réaliser des sèches-linges domestiques, commerciaux ou industriels.

L'intérêt énergétique du procédé et la facilité de réalisation de l'équipement de séchage tient au fait que le procédé met en oeuvre une compression mécanique d'air très humide. Par air très humide, au sens de la présente invention, on entend de l'air contenant entre 85 et 95% d'humidité pour des températures variable de 80 à 90°C, soit des humidités absolues se situant entre 400 et 1200 g d'eau / kg d'air sec. On rappelle que l'air ambiant à 25°C présente une humidité absolue qui se situe entre 8 et 20 g d'eau / kg d'air sec.

L'utilisation de l'air très humide présente plusieurs avantages comme le montrera la description suivante, en particulier l'air très humide permet d'utiliser des systèmes dont l'étanchéité est facile à réaliser et de concevoir ainsi aussi bien des systèmes fermés pour le séchage par lots discontinus que des systèmes de séchage au défilé et donc continus.

Le séchage s'effectue à pression atmosphérique, l'eau s'évapore grâce à la différence de pression partielle de la vapeur de l'eau contenue dans la masse de matière fibreuse et celle de la vapeur d'eau contenue dans l'air chaud. La pression de la vapeur d'eau contenue dans l'air chaud est inférieure à celle de la vapeur de l'eau contenue dans la masse de matière fibreuse.

***Description détaillée***

D'autres caractéristiques et avantages de l'invention apparaîtront à la lecture de la description de variantes de réalisation de l'invention données à titre d'exemple indicatif et non limitatif. Le schéma de principe de l'installation est présenté avec ses variantes de réalisation :

- la figure 1 représente une variante de réalisation d'une installation de séchage par lot,
- la figure 2 représente une seconde variante de réalisation d'une installation de séchage par lot,
- la figure 3 représente la position de la vanne cinq voies pendant de la phase de chauffage et la phase de séchage,
- la figure 4 représente la position de la vanne cinq voies pendant de la phase de refroidissement,
- la figure 5 est une représentation graphique de trois niveaux de puissance de condensation.

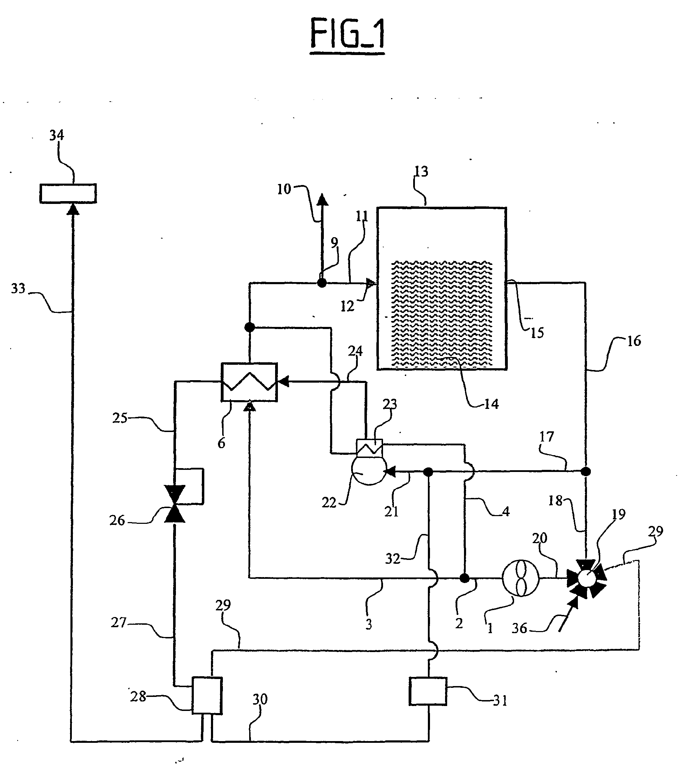

On va maintenant décrire la figure 1 qui représente une variante de réalisation d'un séchoir par lot (par exemple un sèche-linge). Tous les débits indiqués sont, sauf indication contraire, des débits de masse dont l'unité SI (système international) est le kg/s. Le matériau humide 14 à sécher est situé dans l'enceinte de séchage 13. Le débit d'air chaud à l'entrée 12 de l'enceinte de séchage est désigné par le sigle MVEe (Débit Ventilé Entrée enceinte). L'air chaud pénètre dans l'enceinte de séchage 13 par la canalisation d'entrée 11. La température typique de l'air chaud entrant se situe entre 120 et 130°C. L'humidité absolue de l'air chaud entrant est comprise entre 360 et 1100 g / kg air sec, soit inférieure de 8 à 10% à l'humidité absolue de l'air humide à la sortie 15 de l'enceinte de séchage 13. Le matériau humide 14 dont l'humidité doit être extraite est à une température qui varie entre 60 et 90°C. A la sortie 15 de l'enceinte de séchage 13 le débit de l'air humide sortant est désigné par le sigle MVSe (Débit Ventilé Sortie enceinte). L'air humide sort de l'enceinte de séchage 13 par la canalisation de sortie 16. La température de l'air humide à la sortie 15 de l'enceinte de séchage 13 est variable entre 80 et 95°C. L'air humide à la sortie 15 de l'enceinte de séchage 13 présente une humidité absolue qui se situe entre 400 et 1200 g / kg d'air sec. Le débit de l'air humide sortant MVSe est la somme du débit d'air chaud entrant MVEe et du débit d'eau évaporé Me provenant du matériau humide à sécher 14.

Sur la figure 1, on a représenté de manière fictive sur la canalisation d'entrée 11 de l'enceinte de séchage 13 le point de sortie 9 des fuites naturelles ou aménagées vers l'extérieur 10. Les fuites naturelles ou aménagées vers l'extérieur sont situées en amont de l'enceinte de séchage 13, après le ventilateur de circulation d'air 1. En effet, dans cette partie du circuit, le ventilateur de circulation d'air 1 crée une légère surpression par rapport à la pression atmosphérique. L'air sortant au point de sortie 9 est aux conditions de pression, de température et d'humidité du circuit à l'entrée 12 de l'enceinte de séchage 13. On désigne par le sigle MF le débit d'air humide de fuites naturelles ou aménagées vers l'extérieur, en amont de l'enceinte de séchage 13. Les fuites naturelles apparaissent principalement aux joints d'étanchéité du ou des flasques du tambour d'un sèche-linge.

Le débit d'air humide MF des fuites naturelles ou aménagées vers l'extérieur est compensé par des infiltrations d'air naturelles ou aménagées. On désigne par le sigle MI le débit d'air entrant 36 dû aux infiltrations naturelles ou aménagées par la vanne cinq voies 19. Le débit d'air entrant MI est tel que MI = MF. Le débit MI est aux conditions de pression, de température et d'humidité de la pièce où est située l'enceinte de séchage.

Le débit d'air humide MVEs circulant dans la canalisation de sortie 16 de l'enceinte 13 se divise en deux débits respectivement dans les canalisations 17 et 18.

Un premier débit, ci-après désigné par le sigle MV1, circule vers le ventilateur 1 dans la canalisation 18. Un second débit, ci-après désigné par le sigle MC, circule vers le compresseur 22 via les canalisations 17 et 21. Le rapport entre les débits MV1 et MC est fixé respectivement par le ventilateur 1 pour MV1 et par le compresseur 22 pour MC. Le rapport des débits, ci-après désigné par RD (RD = MC / MV1) varie entre 5 et 10%.

La canalisation de refoulement du ventilateur 2 se divise en une canalisation principale 3 et une canalisation dérivée 4. Un troisième débit, ci-après désigné par le sigle MVp (débit de ventilation principal) circule dans canalisation principale 3. Un quatrième débit, ci-après désigné par le sigle MVd (débit de ventilation dérivé) circule dans canalisation dérivée 4. Le débit MVd, dans la canalisation dérivée 4 représente 10 à 15 % du débit ventilé MV1.

Le second débit d'air humide MC, circulant dans la canalisation 21, est comprimé par un compresseur 22 jusqu'à une pression variant typiquement entre 4 et 7 bar absolus. A la sortie du compresseur 22 la température de refoulement de l'air humide est de l'ordre de 250°C si aucun dispositif de refroidissement n'est mis en place. Il est nécessaire de refroidir la plaque à clapet ou le volume de refoulement 23 . Le refroidissement de la plaque à clapet ou du volume de refoulement est effectué en réalisant une plaque à clapet ou un volume de refoulement à surface comportant des ailettes (non représentées).

Les ailettes de refroidissement de la plaque à clapet ou du volume de refoulement 23 sont disposées dans la canalisation dérivée 4 parcourue par le débit de ventilation dérivé MVd. Il en résulte un réchauffement du débit MVd.

Les ailettes de refroidissement de la plaque à clapet ou du volume de refoulement 23 permettent de maintenir la température d'équilibre de la plaque à clapet ou du volume de refoulement à une température inférieure à 160°C.

On va maintenant poursuivre la description de la variante de réalisation représentée sur la figure 1.

Le circuit de condensation du condenseur 6 reçoit la canalisation de refoulement 24 du compresseur 22 en aval de celui-ci. Le circuit externe de refroidissement du condenseur 6 reçoit la canalisation 3 où se réchauffe le débit ventilé principal MVp. Le condenseur 6 est un condenseur partiel : une grande partie (de l'ordre de 90% en masse) de la vapeur d'eau du débit d'air très humide MC sortant du compresseur 22 y est condensée. Le débit MC est diphasique en sortie du condenseur 6. Il est composé d'un débit d'air peu humide appelé MAC 35 et d'un débit d'eau liquide appelé MEC (MC = MEC + MAC). Ce débit diphasique MC est détendu jusqu'à une pression légèrement supérieure à la pression atmosphérique par le détendeur déverseur 26 . Un détendeur déverseur est un détendeur qui maintient la pression amont constante et qui délivre un débit variable pour la maintenir.

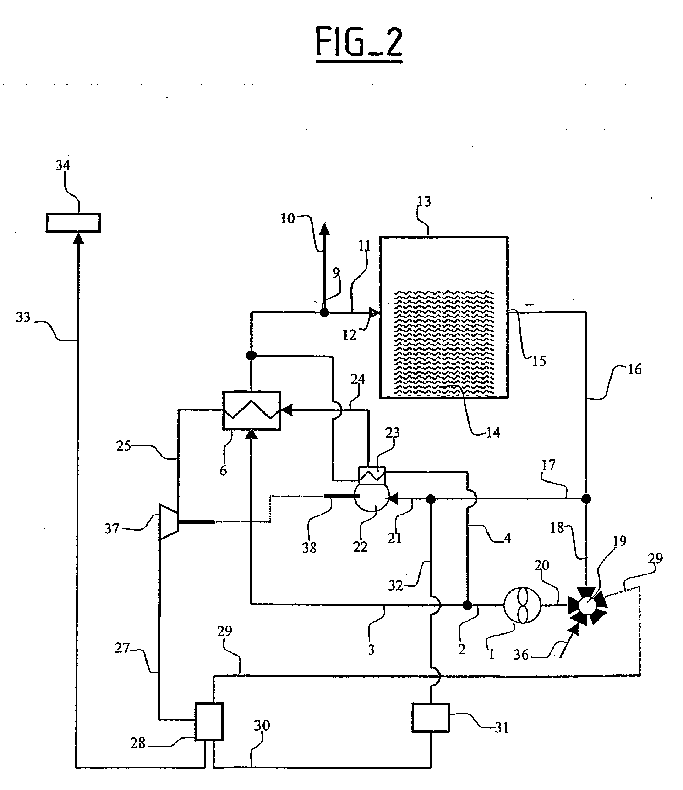

Dans la variante de réalisation représentée sur la figure 2 le détendeur déverseur 26 est remplacé par une turbine de détente volumétrique 37. Elle permet aussi de maintenir une pression amont constante par modulation du débit la traversant. Le débit diphasique MC est admis via la canalisation 25 dans la turbine volumétrique de détente 37 où il est détendu jusqu'à une pression légèrement supérieure à la pression atmosphérique. L'arbre de la turbine de détente 37 peut être couplé à l'arbre du moteur d'entraînement du compresseur 38.

Dans le cas de la variante du détendeur déverseur 26 (figure 1) ou dans le cas de la variante de la turbine de détente 37 (figure 2), le débit diphasique détendu MC (MC= MAC+MEC) est admis dans le séparateur 28 via la canalisation 27. Le débit d'eau liquide MEC est séparé du débit d'air MAC dans le séparateur 28. Le débit d'eau liquide MEC est réintégré par la différence de pression dans le réservoir 34 via la canalisation 33 . Le débit d'air MAC 35, lui aussi détendu, est aspiré par le ventilateur 1 par la canalisation de sortie 29 du séparateur 28 et la vanne cinq voies 19. Le débit MAC 35 provenant de la canalisation 29 est ainsi mélangé avec le débit d'air humide MV1 180 en provenance de la canalisation 18. Le débit d'infiltration d'air MI 36 est mélangé avec les débits MAC 35 et MV1 180. Le débit appelé MV, aspiré par le ventilateur 1 via la canalisation 20 et la vanne cinq voies 19 est tel que MV = MAC + MI + MV1.

Comme indiqué précédemment, le débit MV est divisé en débit principal MVp dans la canalisation 3 et débit dérivé MVd dans la canalisation 4.

Le débit MVp pénètre via la canalisation intermédiaire 3 dans le condenseur 6 et y est réchauffé, de la température typique de sortie de l'enceinte de séchage 13 de l'ordre de 80 à 95°C à la température typique d'entrée de l'enceinte de séchage 13 variant entre 120 et 130°C. Compte tenu du fait que la condensation de la vapeur du débit MC à l'intérieur des tubes du condenseur 6 s'effectue à température glissante typiquement de 135 à 95°C, il est avantageux de réaliser le condenseur 6 sous la forme d'un échangeur à tube comportant des ailettes. Les tubes sont arrangés en rangs successifs. Un nombre typique de rangs de tubes où MC se condense partiellement à l'intérieur des tubes est de 4 à 8. L'arrangement des tubes permet une circulation globale des débit MC et MVp qui est à la fois à courant croisé et à tendance contre-courant, le débit MVp, rencontre des zones de plus en plus chaudes correspondant au refroidissement progressif du débit MC. Cette circulation à courant croisé et à tendance contre-courant minimise les écarts de température entre le débit MVp qui se réchauffe et le débit MC qui se condense partiellement.

La puissance PC échangée dans le condenseur 6 comprend à la fois la puissance de désurchauffe du débit d'air humide MC et la puissance de condensation de l'eau MEC contenue dans ce débit MC.

La pression de condensation de la vapeur d'eau est choisie en fonction du rapport de débit RD et de la puissance PC à échanger au condenseur 6. L'équation de bilan énergétique du dispositif de séchage s'écrit alors:

$$PC = Pe + Pth + PF \qquad \text{Equation (1)}$$

La puissance thermique Pe est le produit du débit de vapeur Me évaporé du matériau humide à sécher 14 par la chaleur latente de vaporisation de l'eau Lv à la pression partielle correspondante. $Pe = Lv \cdot Me$

Les pertes thermiques Pth proviennent des déperditions de chaleur de l'enceinte 13 et des différentes canalisations du circuit. Ce sont les pertes par convection, rayonnement et conduction du séchoir par rapport à la pièce dans lequel il est situé.

PF est la puissance thermique perdue par le débit de fuite MF à une enthalpie Hf, moins le débit d'infiltration d'air MI à une enthalpie Hi. La puissance thermique perdue par fuite PF est telle que :

$$PF = (MF \cdot Hf) - (MI \cdot Hi)$$

Hf et Hi sont calculées en connaissant les températures, les pressions et les humidités absolues des débits MF et MI.

En considérant que le débit d'eau évaporé Me est équivalent au débit condensé MEC, la puissance de condensation PC peut alors s'exprimer par :

$$PC = Pe + W_{comp} \qquad \text{Equation (2)}$$

Où $W_{comp}$ est la puissance de compression transmise au débit comprimé MC.

L'équation (2) est l'application de la conservation de l'énergie au circuit du débit comprimé MC.

En rapprochant les équations 1 et 2, on constate que la puissance de compression $W_{comp}$ transmise au débit MC est compensée en régime permanent par les pertes thermiques Pth et par les pertes par fuites PF, ce constat permet en fixant la puissance de condensation PC et l'efficacité énergétique du cycle de compression de définir les pertes thermiques directes et par fuites permettant l'équilibre thermique du système. L'équilibre thermique du système est atteint lorsque la puissance de compression $W_{comp}$ est égale à la somme des pertes thermiques Pth et des pertes par fuites PF. La puissance excédentaire est alors nulle. La puissance excédentaire désignée par le sigle Pexc et est telle que :

$$Pexc = W_{comp} - Pth - PF$$

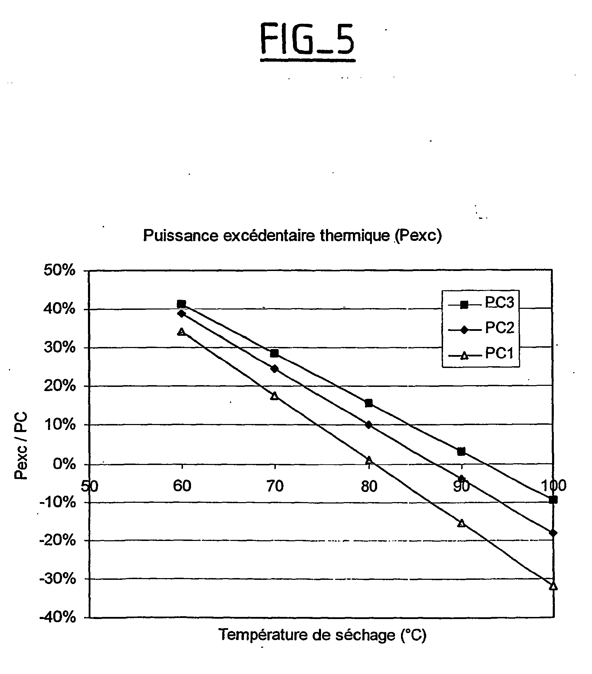

La figure 5 présente pour trois niveaux de puissance de condensation PC, PC1 qui est une puissance de condensation de référence unitaire, PC2 = 1,5 PC1 et PC3 = 2 PC1. L'axe vertical représente la puissance excédentaire Pexc en pourcentage de PC, l'axe horizontal la température d'évaporation du matériau humide. La figure 5 présente ainsi la variation de la puissance excédentaire Pexc en fonction de la température de séchage et pour 3 niveaux de puissances de condensation respectivement PC1, PC2 et PC3.

Le niveau 0% indique que la chaleur produite par le travail de compression $W_{comp}$ est entièrement compensée par les pertes par déperditions Pth et les pertes par fuites PF. L'excédent thermique Pexc défini ci-dessus est alors nul. Lorsque Pexc est négatif, les pertes par déperditions Pth et par fuites PF sont trop élevées et l'équilibre du système à la température de séchage correspondante n'est pas possible. De même lorsque Pexc est positif, les pertes par déperditions Pth et par fuites PF sont trop faibles pour compenser la chaleur produite par le travail de compression $W_{comp}$, l'équilibre du système à la température de séchage correspondante n'est pas possible.

Pour un débit de fuite MF et un débit d'infiltration MI constants, le rejet de chaleur PF est d'autant plus grand que la température de séchage du matériau humide 14 est élevée et l'humidité spécifique de l'air humide dans l'enceinte de séchage 13 est élevée.

Pour un débit de fuite MF et un débit d'infiltration MI constants, le rejet de chaleur PF tend vers une valeur maximale lorsque la température de séchage du matériau humide 14 est de 100°C et lorsque l'air humide dans l'enceinte de séchage 13 est entièrement remplacée par de la vapeur d'eau.

Le procédé de séchage selon l'invention, en air très humide, intègre les contraintes de débit de fuite dans la conception même du procédé et du dispositif mettant en oeuvre le procédé.

Pour un sèche-linge domestique le taux de fuite typique MF se situe entre 1 et 2%, c'est à dire que 1 à 2% du débit de circulation MV1 est rejeté hors du circuit. Le procédé de séchage par compression mécanique d'air très humide selon l'invention, est compatible avec le taux de fuite typique MF défini et constitue en cela un intérêt technique particulier.

L'invention permet de réaliser un système de séchage avec un seul échangeur sur le débit d'air MVp, ce qui distingue notamment l'invention des systèmes utilisant une pompe à chaleur qui nécessite 2 échangeurs : un évaporateur et un condenseur.

Dans le cas d'un système de séchage par lot, l'opération de séchage se déroule en trois phases. Dans le cas d'un système de séchage au défilé, ces trois phases se succèdent dans l'espace.

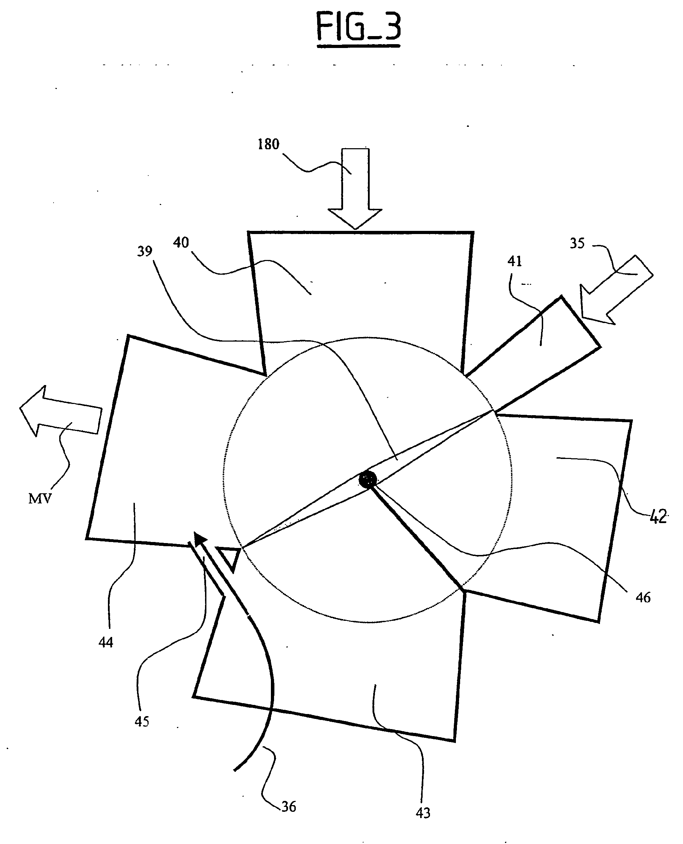

Pour décrire la succession des trois phases, le fonctionnement de la vanne cinq voies 19 est détaillé ci-dessous en se référant aux figures 3, 4 et 5.

La vanne cinq voies 19 possède cinq voies sur lesquelles viennent se raccorder différentes canalisations. Un volet mobile 39 possède un axe de rotation 46 autour duquel il peut tourner, commandé par un actionneur (non représenté) solidaire de l'axe de rotation 46.

La voie 40 est raccordée via les canalisations 18 et 16 en aval de l'enceinte de séchage 13. La voie 41 est raccordée via la canalisation 29 à l'aval du séparateur 28. La voie 42 est une voie de mise à l'air pour purger le circuit. La voie 43 est une voie d'admission d'air neuf. La voie 44 est raccordée à la canalisation 20 à l'amont du ventilateur 1. Entre la voie 43 et la voie 44 il existe un orifice de bypass 45 qui permet au débit de fuite MI 36 d'entrer dans la canalisation 20 via la voie 44. La dépression créée dans la canalisation 20 par l'aspiration du ventilateur 1 permet d'introduire le débit d'air entrant 36 MI.

Pendant la phase de chauffage I, une quantité d'eau résidant dans le séparateur 28 est transférée via la canalisation 30 dans le bouilleur électrique 31 mis sous tension. Le débit de vapeur d'eau évaporé dans le bouilleur 31, représenté par le sigle Meb, est aspiré par le compresseur 22, via la canalisation 32. Le débit Meb est mélangé en amont du compresseur 22 avec le débit MC1 provenant de l'enceinte de séchage 13, via les canalisations 16 et 17. La somme des débits Meb et MC1 compose le débit MC aspiré et comprimé par le compresseur 22. Le débit MC est un mélange d'air très humide. Il est condensé dans le condenseur 6, permettant ainsi le réchauffage du débit MVp provenant de l'enceinte de séchage 13, via la canalisation 16, la vanne cinq voies 19, le ventilateur 1 et la canalisation d'entrée 3 du condenseur 6. Pendant la phase I de chauffage, le volet 39 (figure 3) met en communication la canalisation 20 (voie 44), la canalisation 18 (voie 40), la canalisation 29 (voie 41) et, via le by-pass 45, la voie 43 par laquelle pénètre le débit de fuite MI 36. Il en résulte que le ventilateur 1 aspire les débits MV1 provenant de l'enceinte 13, MAC 35 provenant du séparateur 28 et MI 36 provenant de la pièce, et refoule le débit MV vers le condenseur 6.

L'écart de température mesuré entre l'entrée 12 de l'enceinte de séchage 13 et la sortie 15 de l'enceinte de séchage 13 est utilisé pour la régulation du système permettant de passer de la phase de chauffage I à la phase de séchage II. Lorsque l'écart de température est typiquement supérieur à 30K et lorsque le niveau de température souhaité en entrée 12 de l'enceinte 13 est atteint, l'alimentation électrique de la résistance électrique du bouilleur 31 est arrêtée, la phase de séchage II peut commencer. Pendant la phase de séchage II, le volet 39 occupe la même position que celle qu'il occupait pendant la phase de chauffage et met en communication les mêmes voies et les mêmes canalisations. Le séchage de la masse fibreuse 14 dans l'enceinte de séchage 13 s'effectue à débit d'évaporation constant jusqu'à ce que soit atteint un seuil de siccité. Lorsque ce seuil de siccité est atteint, le débit évaporé décroît car l'alimentation capillaire dans le matériau n'est plus assurée. Ce seuil est identifié et détecté par une diminution de l'écart de température entre l'entrée 12 de l'enceinte de séchage 13 et la sortie 15 de l'enceinte de séchage 13. La température de sortie de l'enceinte de séchage 13 augmente. On détermine de manière expérimentale, pour chaque matériau à sécher l'écart approprié et, corrélativement, le moment où le séchage peut être arrêté.

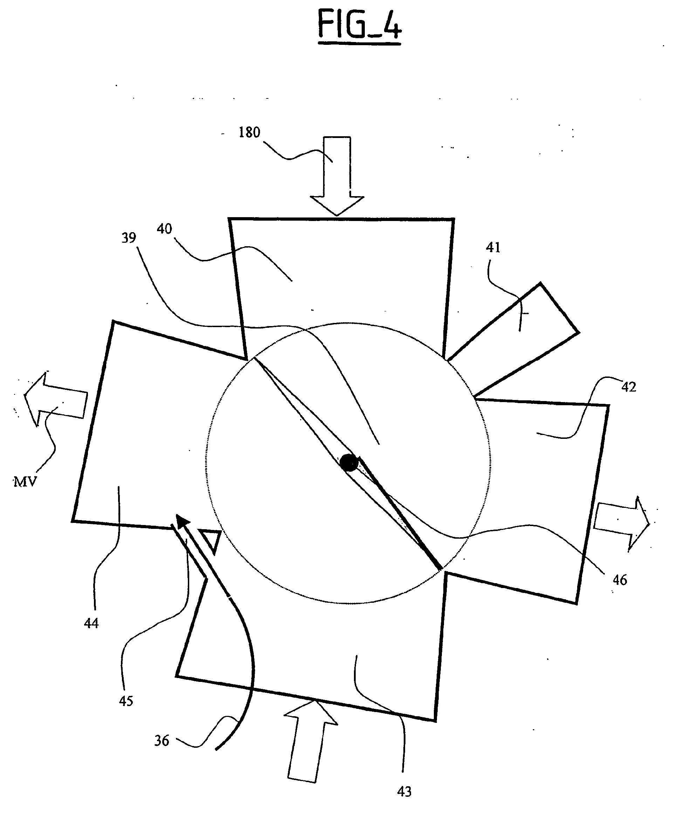

La phase de refroidissement III est une phase au cours de laquelle on ramène la matière fibreuse à une température proche de la température ambiante. A cet effet, le compresseur 22 est arrêté, le ventilateur 1 est toujours en fonctionnement Pendant la phase III de refroidissement, le volet 39 (figure 4) met en communication :

- d'une part, la voie 43 par laquelle pénètre l'air extérieur et la canalisation 20 (voie 44),
- d'autre part, la canalisation 18 (voie 40), la canalisation 29 (voie 41) et la voie 42 de mise à l'air.

Il en résulte que :

- le ventilateur 1 aspire un débit d'air extérieur via les voies 43 et 44, et le refoule vers l'enceinte 13, refroidissant ainsi la matière fibreuse 14,
- l'air MV1 provenant de l'enceinte 13 est refoulé à l'extérieur via la voie 42.

Quand la température du débit à la sortie 15 de l'enceinte 13 est de l'ordre de 40°C, le ventilateur 1 est arrêté et le cycle de séchage est terminé.

| Nomenclature Sèche Linge III | |
|---|---|
| | |
| 1 | ventilateur de circulation d'air |
| 2 | canalisation de refoulement du ventilateur |
| 3 | canalisation principale |
| 4 | canalisation dérivée |
| 6 | condenseur |
| 9 | point de sortie |
| 10 | fuites naturelles ou aménagées vers l'extérieur |
| 11 | canalisation d'entrée |
| 12 | entrée de l'enceinte de séchage |
| 13 | enceinte de séchage |
| 14 | matériau humide |
| 15 | sortie de l'enceinte de séchage |
| 16 | canalisation de sortie |
| 17 | canalisation |
| 18 | canalisation |
| 19 | vanne cinq voies |
| 20 | canalisation |
| 21 | canalisation |

(suite)

| Nomenclature Sèche Linge III | |
|:---:|:---|
| 22 | compresseur |
| 23 | plaque à clapet ou volume de refoulement |
| 24 | canalisation de refoulement du compresseur |
| 25 | canalisation |
| 26 | détendeur déverseur |
| 27 | canalisation |
| 28 | séparateur |
| 29 | canalisation de sortie du séparateur |
| 30 | canalisation |
| 31 | bouilleur électrique |
| 32 | canalisation |
| 33 | canalisation |
| 34 | réservoir |
| 35 | débit d'air peu humide appelé MAC |
| 36 | débit d'infiltration d'air MI |
| 37 | turbine de détente volumétrique |
| 38 | arbre du moteur d'entraînement du compresseur |
| 39 | volet mobile |
| 40 | voie |
| 41 | voie |
| 42 | voie de mise à l'air |
| 43 | voie d'admission d'air neuf |
| 44 | voie |
| 45 | orifice de bypass |
| 46 | axe de rotation |
| 180 | débit d'air humide MV1 |

**Revendications**

1. Procédé de séchage d'une masse de linge (14), située dans une zone de séchage (13) ; ledit procédé comprenant l'étape :

   - de ventiler (1), via un circuit de ventilation, à travers la masse de linge (14) située dans ladite zone de séchage (13), de l'air très humide dont le taux d'humidité est inférieur à celui à l'intérieur de la zone de séchage, à une pression voisine de la pression atmosphérique et à une température supérieure à celle du matériau à sécher ;
   - de sorte qu'il est ainsi possible d'extraire de la masse de linge, par évaporation, sous forme de vapeur d'eau, l'humidité qu'elle contient;

   ledit procédé est **caractérisé en outre par** l'étape :

   - de récupérer (22, 6) la chaleur de condensation de la vapeur d'eau extraite de la masse de linge pour chauffer l'air humide,

- de ménager des fuites (9, 10, 36, 43) entre l'air ambiant extérieur et ledit circuit de ventilation en amont et en aval de la zone de séchage ;

lesdites fuites (9, 10) situées sur la partie du circuit de ventilation en amont de la zone de séchage (13) permettant en régime permanent un échange massique et thermique vers l'air ambiant extérieur ;
lesdites fuites (36, 43) situées sur la partie du circuit de ventilation en aval de la zone de séchage (13) permettant en régime permanent un échange massique par entrée d'air ambiant ;
de sorte qu'il est ainsi possible d'assurer les équilibres thermiques et massiques sans rejeter vers l'air ambiant des quantités substantielles d'air humide ;
de sorte qu'il est ainsi possible de faire intervenir au moins en partie les fuites naturelles, notamment au niveau des pièces mobiles, dans le cycle de fonctionnement normal du procédé de séchage.

2. Procédé selon la revendication 1 ; ledit procédé étant tel que, pour récupérer la chaleur de condensation de la vapeur d'eau extraite de la matière fibreuse:

- on prélève (17) une fraction de l'air humide à la sortie de la zone de séchage (13),
- on comprime (22) ladite fraction prélevée avant de l'introduire dans un condenseur (6) situé sur une canalisation (11) à l'entrée de la zone de séchage (13) ;

de sorte que la condensation dans ledit condenseur de ladite fraction prélevée fournit l'énergie calorifique nécessaire pour chauffer l'air humide à l'entrée de la zone de séchage.

3. Procédé selon la revendication 2 ; ledit procédé étant tel que :

- on comprime (22) la fraction prélevée à une pression telle que la température de condensation dans le condenseur (6) soit comprise entre 95°C et 135°C ; de sorte que l'air humide à l'entrée de la zone de séchage est chauffé dans une gamme de température comprise entre 120°C et 130°C.

4. Installation de séchage d'une masse de matière fibreuse humide (14), notamment d'une masse de linge ; ladite masse de matière fibreuse étant située dans une zone de séchage (13) ;
ladite installation comprenant :

- un circuit de ventilation (16, 18, 20, 1, 2, 3, 4, 11) alimentant la zone de séchage (13) en air très humide avec un taux d'humidité inférieur à celui situé à l'intérieur de la zone de séchage, à une pression voisine de la pression atmosphérique et à une température supérieure à celle du matériau à sécher;

de sorte qu'il est ainsi possible d'extraire de la matière fibreuse, par évaporation, sous forme de vapeur d'eau, l'humidité qu'elle contient ;
ladite installation est **caractérisé par** :

- un circuit de récupération (17, 21, 22, 24, 6) de la chaleur de condensation de la vapeur d'eau extraite de la matière fibreuse ; ledit circuit de récupération étant destiné à chauffer l'air humide ;
- des fuites (9, 10, 43, 36) appropriées entre l'air ambiant extérieur et ledit circuit de ventilation, situées en amont et en aval de la zone de séchage ;

lesdites fuites (9, 10) situées sur la partie du circuit de ventilation en amont de la zone de séchage (13) permettant un échange massique et thermique vers l'air ambiant extérieur ;
lesdites fuites (43, 36) situées sur la partie du circuit de ventilation en aval de la zone de séchage (13) permettant un échange massique par entrée d'air ambiant ;
de sorte qu'il est ainsi possible d'assurer les équilibres thermiques et massiques sans rejeter vers l'air ambiant des quantités substantielles d'air humide ;
de sorte qu'il est ainsi possible de faire intervenir au moins en partie les fuites naturelles, notamment au niveau des pièces mobiles, dans le cycle de fonctionnement de l'installation de séchage.

5. Installation de séchage selon la revendication 4 ; ladite installation étant telle que le circuit de ventilation comprend :

- un ventilateur (1) situé en aval de la zone de séchage,
- un condenseur (6) comprenant un circuit de refroidissement ;

ledit circuit de refroidissement étant situé en aval du ventilateur (1) et en amont de la zone de séchage (13).

6. Installation de séchage selon la revendication 5 ; ladite installation étant telle que le circuit de récupération, destiné à récupérer la chaleur de condensation de la vapeur d'eau extraite de la matière fibreuse, comprend :

- une canalisation (17) permettant de dériver, à la sorti de la zone de séchage (13), une fraction de l'air humide vers un compresseur (22) situé en amont dudit condenseur (6),
- un détendeur déverseur (26) ou une turbine volumétrique (37) situé en aval du compresseur (22) permettant de maintenir une pression de condensation constante,
- un séparateur de phase (28) situé en aval du détendeur déverseur (26) ou de la turbine volumétrique (37) permettant de séparer l'eau liquide condensée de l'air ;

de sorte que la condensation dans ledit condenseur de ladite fraction d'air humide dérivée fournit l'énergie calorifique nécessaire pour chauffer l'air humide avant l'entrée de la zone de séchage.

7. Installation de séchage selon la revendication 6 ; ladite installation étant telle que ledit compresseur (22) comprime la fraction dérivée de l'air humide à une pression telle que la température de condensation dans le condenseur (6) soit comprise entre 95°C et 135°C ;
de sorte que l'air humide à l'entrée de la zone de séchage est chauffé dans une gamme de température comprise entre 95°C et 135°C.

8. Installation de séchage selon l'une quelconque des revendications 4 à 7 ; ladite installation étant telle que ledit circuit de refroidissement du condenseur (6) est préférentiellement à courant croisé à tendance contre-courant.

9. Installation de séchage selon l'une quelconque des revendications 4 à 8 ; ladite installation étant telle qu'elle comprend une vanne à cinq voies (19) comportant une voie de mise à l'air.

**Claims**

1. Method for drying a mass of mass of laundry (14), located in a drying zone (13); the method comprising the step:

- of ventilating (1), via a ventilation circuit, through the mass of laundry (14) located in the drying zone (13), very moist air, whose moisture content is less than that inside the drying zone, at a pressure close to atmospheric pressure and at a temperature higher than that of the material to be dried; whereby it is then possible to extract from the mass of laundry, by evaporation, in the form of water vapor, the moisture that it contains;

the method being **characterized by** the steps:

- of recovering (22, 6) the heat of condensation of the water vapor extracted from the mass of laundry to heat the moist air,
- of providing leaks (9, 10, 36, 43) between the outside ambient air and said ventilation circuit upstream and downstream of the drying zone;

wherein, the leaks (9, 10) are located on the part of the ventilation circuit upstream of the drying zone (13) for exchanging a mass and heat to the outside ambient air;
and the leaks (36, 43) are located on the part of the ventilation circuit downstream of the drying zone (13) for exchanging a mass by inlet of ambient air;
whereby a balance of heat and mass is achieved without expelling large amounts of moist air into the ambient air;
and whereby it is then possible to introduce natural leaks at least in part, and in particular in parts of the system that are mobile, in the normal operating cycle of the drying method.

2. Method in accordance with claim 1; the method being such that to recover the heat of condensation of the water vapor extracted from the fibrous material:

- a fraction of the moist air is taken (17) at the outlet of the drying zone (13),
- the fraction taken is compressed (22) before introducing it into a condenser (6) located on a pipeline (11) at the inlet of the drying zone (13);

whereby condensation in the condenser of the fraction taken supplies the heat energy needed to heat the moist air at the inlet of the drying zone.

3. A method in accordance with claim 2; the method being such that:

   - the fraction taken is compressed (22) at a pressure such that the condensation temperature in the condenser (6) is in the range of 95 degrees C. to 135 degrees C.;

   whereby the moist air at the inlet of the drying zone is heated in a temperature range of 120 degrees C. to 130 degrees C.

4. A system for drying a mass of wet fibrous material (14), and in particular a mass of laundry, the mass of fibrous material being located in a drying zone (13); the system comprising:

   - a ventilation circuit (16, 18, 20, 1, 2, 3, 4, 11) supplying the drying zone (13) with very moist air having a moisture content less than that located inside the drying zone, at a pressure close to atmospheric pressure and at a temperature higher than that of the material to be dried;

   whereby moisture is extracted from the fibrous material, by evaporation, in the form of water vapor; the system being **characterized by**:

   - a circuit for recovering (17, 21, 22, 24, 6) the heat of condensation of the water vapor extracted from the fibrous material; the recovery circuit being configured to heat the moist air;

   the system additionally comprising:

   - appropriate leaks (9, 10, 43, 36) between outside ambient air and the ventilation circuit, located upstream and downstream of the drying zone;

   wherein, the leaks (9, 10) are located on the part of the ventilation circuit upstream of the drying zone (13) for exchanging a mass and heat to the outside ambient air;
   and the leaks (43, 36) are located on the part of the ventilation circuit downstream of the drying zone (13) for exchanging a mass by inlet of ambient air;
   whereby a balance of heat and mass is achieved without expelling large amounts of moist air into the ambient air whereby natural leaks are introduced at least in part, in particular in parts of the system that are mobile, in a normal operating cycle of the drying system.

5. A drying system in accordance with claim 4; the system being such that the ventilation circuit comprises:

   - a fan (1) located downstream of the drying zone,
   - a condenser (6) comprising a cooling circuit;

   the cooling circuit being located downstream of the fan (1) and upstream of the drying zone (13).

6. A drying system in accordance with claim 5; the system being such that the recovery circuit, which recovers the heat of condensation of the water vapor extracted from the fibrous material, comprises:

   - a pipeline (17) for diverting, at an outlet of the drying zone (13), a fraction of the moist air to a compressor (22) located upstream of the condenser (6),
   - a diverting pressure reducer (26) or a volumetric turbines (37) located downstream of the compressor (22) for maintaining a substantially constant condensation pressure,
   - a phase separator (28) located downstream of the diverting pressure reducer (26) or of the volumetric turbine (37) for separating the condensed liquid water from the air;

   whereby the condensation in the condenser of the fraction of diverted moist air supplies the heat energy needed to heat the moist air before the moist air enters the drying zone.

7. A drying system in accordance with claim 6; the system being such that the compressor (22) compresses the diverted fraction of moist air at a pressure such that the condensation temperature in the condenser (6) is in the range of 95 degrees C. to 135 degrees C.; whereby the moist air at the inlet of the drying zone is heated in a temperature range of 95 degrees C. to 135 degrees C.

8. A drying system in accordance with any of the claims 4 through 7; wherein the cooling circuit of the condenser (6) has a cross current flow with a countercurrent tendency.

9. A drying system in accordance with any of the claims 4 through 8; the system comprising a five-way valve (19) comprising a venting way.

## Patentansprüche

1. Verfahren zum Trocknen einer Wäschemasse (14), die sich in einem Trockenraum (13) befindet; das besagte Verfahren enthält den Schritt:

    - der Ventilation (1) über einen Ventilationskreislauf und durch die Wäschemasse (14) hindurch, die sich im besagten Trockenraum (13) befindet, von sehr feuchter Luft, deren Feuchtigkeitsgrad unter jenem liegt, der im Inneren des Trockenraumes herrscht, bei einem Druck nahe dem atmosphärischen Druck und bei einer Temperatur, die über jener des zu trocknenden Materials liegt;

    sodass es möglich ist, die Feuchtigkeit durch Verdampfung in Form von Wasserdampf aus der Wäschemasse zu ziehen;
    das besagte Verfahren wird weiters durch folgende Schritte charakterisiert:

    - die Rückgewinnung (22, 6) der Kondensationswärme aus dem Wasserdampf, der der Wäschemasse entzogen wurde, zum Erwärmen der feuchten Luft,
    - die Verwaltung der Auslässe (9, 10, 36, 43) zwischen der äußeren Umgebungsluft und der besagten Ventilation vor und nach dem Trockenraum;

    die besagten Auslässe (9, 10), die sich in jenem Teil des Ventilationskreislaufes befinden, die vor dem Trockenraum (13) liegen, ermöglichen so einen dauerhaften Massen- und Temperaturtausch in Richtung der äußeren Umgebungsluft;
    die besagten Auslässe (36, 43), die sich in jenem Teil des Ventilationskreislaufes befinden, die nach dem Trockenraum (13) liegen, ermöglichen so einen dauerhaften Massentausch über den Eingang der äußeren Umgebungsluft;
    sodass ein Temperatur- und Massenausgleich gewährleistet werden kann, ohne größere Mengen an feuchter Luft in die Umgebungsluft abzugeben;
    sodass es möglich ist, zumindest teilweise die natürlichen Auslässe mit einzubeziehen, im Speziellen im Bereich der beweglichen Teile während des normalen Betriebszyklus des Trockenprozesses.

2. Verfahren nach Anspruch 1; das besagte Verfahren ist dabei ausgelegt, um die Kondensationswärme des Wasserdampfes, der dem faserigen Material entzogen wurde, zurück zu gewinnen:

    - man entnimmt (17) einen Teil der feuchten Luft am Ausgang des Trockenraumes (13),
    - man komprimiert (22) den besagten entzogenen Teil, bevor man ihn in einen Kondensator (6) einführt, der sich an einem Kanal (11) am Eingang des Trockenraumes (13) befindet;

    sodass die Kondensierung im besagten Kondensator des besagten entzogenen Teiles die nötige Wärmeenergie liefert, um die feuchte Luft am Eingang des Trockenraumes zu erwärmen.

3. Verfahren nach Anspruch 2; das besagte Verfahren ist dabei so ausgelegt, dass:

    - man den entzogenen Teil auf einen solchen Druck komprimiert (22), dass die Kondensationstemperatur im Kondensator (6) zwischen 95°C und 135°C liegt;

    sodass die feuchte Luft am Eingang des Trockenraumes auf einen Temperaturwert zwischen 120°C und 130°C erwärmt wird.

**4.** Anlage zum Trocknen einer Masse an feuchtem faserigem Material (14), im Speziellen einer Wäschemasse; die besagte Masse an faserigem Material befindet sich dabei in einem Trockenraum (13); die besagte Anlage enthält:

- einen Ventilationskreislauf (16, 18, 20, 1, 2, 3, 4, 11), über den der Trockenraum (13) mit sehr feuchter Luft versorgt wird, deren Feuchtigkeitsgrad unter jenem liegt, der im Inneren des Trockenraumes herrscht, bei einem Druck nahe dem atmosphärischen Druck und bei einer Temperatur, die über jener des zu trocknenden Materials liegt ;

sodass es möglich ist, die enthaltene Feuchtigkeit durch Verdampfung in Form von Wasserdampf aus der Wäschemasse zu ziehen; die besagte Anlage ist wie folgt aufgebaut:

- ein Kreislauf zum Entziehen (17, 21, 22, 24, 6) der Kondensationswärme aus dem Wasserdampf, der dem faserigen Material entzogen wurde; der besagte Kreislauf ist dazu bestimmt, die feuchte Luft zu erhitzen;
- entsprechende Durchlässe (9, 10, 43, 36) zwischen der äußeren Umgebungsluft und dem besagten Ventilationskreislauf, vor und nach dem Trockenraum;

die besagten Durchlässe (9, 10), die sich an jenem Teil des Ventilationskreislaufs befinden, der vor dem Trockenraum (13) liegt, ermöglichen einen Massen- und Temperaturtausch in Richtung der äußeren Umgebungsluft; die besagten Durchlässe (43, 36), die sich an jenem Teil des Ventilationskreislaufs befinden, der nach dem Trockenraum (13) liegt, ermöglichen einen Massentausch durch die einströmende Umgebungsluft; sodass ein Temperatur- und Massenausgleich gewährleistet werden kann, ohne größere Mengen an feuchter Luft in die Umgebungsluft abzugeben; sodass es möglich ist, zumindest teilweise die natürlichen Auslässe mit einzubeziehen, im Speziellen im Bereich der beweglichen Teile während des normalen Betriebszyklus der Trockenanlage.

**5.** Trockenanlage nach Anspruch 4; die besagte Anlage ist dabei so gestaltet, dass im Umluftkreislauf folgende Bauteile vorhanden sind:

- ein Ventilator (1) nach dem Trockenraum,
- ein Kondensator (6) mit einem Kühlkreislauf;

der besagte Kühlkreislauf befindet sich nach dem Ventilator (1) vor dem Trockenraum (13).

**6.** Trockenanlage nach Anspruch 5; die besagte Anlage ist dabei so gestaltet, dass der Entzugskreislauf, der dazu bestimmt ist, die Kondensationswärme aus dem Wasserdampf zu entziehen, der dem faserigen Material entzogen wird, folgendes enthält:

- einen Kanal (17) zum Ableiten eines Teils der feuchten Luft am Ausgang des Trockenraumes (13) zu einem Kompressor (22), der sich vor dem besagten Kondensator (6) befindet,
- ein Druckminderungs- und Ablassventil (26) oder eine volumetrische Expansionsturbine (37), die nach dem Kompressor (22) angebracht sind, zur Beibehaltung eines konstanten Kondensationsdrucks,
- ein Phasenabscheider (28) nach dem Druckminderungs- und Ablassventil (26) oder der volumetrischen Expansionsturbine (37) zum Trennen des kondensierten Wassers aus der Luft;

sodass die Kondensation im besagten Kondensator des besagten Teils der abgeleiteten feuchten Luft die nötige Wärmeenergie zum Erwärmen der feuchten Luft vor dem Eingang des Trockenraumes liefert.

**7.** Trockenanlage nach Anspruch 6; die besagte Anlage ist dabei so gestaltet, dass der besagte Kompressor (22) den abgeleiteten Teil der feuchten Luft auf einen Druck komprimiert, sodass die Kondensationstemperatur im Kondensator (6) zwischen 95°C und 135°C liegt; sodass die feuchte Luft am Eingang des Trockenraumes auf einen Temperaturwert zwischen 95°C und 135°C erwärmt wird.

**8.** Trockenanlage nach irgendeinem der Ansprüche 4 bis 7; die besagte Anlage ist dabei so gestaltet, dass der besagte Kühlkreislauf des Kondensators (6) vorzugsweise im Kreuzstrom und Tendenz zum Gegenstrom läuft.

9. Trockenanlage nach irgendeinem der Ansprüche 4 bis 8; die besagte Anlage ist dabei so gestaltet, dass sie ein 5-Wege-Ventil (19) enthält, mit einem Weg für Abluft ins Freie.

# FIG_1

# FIG_2

# FIG_3

# FIG_4

# FIG_5

Puissance excédentaire thermique (Pexc)